# EUROPÄISCHE PATENTANMELDUNG

(11) **EP 1 304 881 A1**
(43) Veröffentlichungstag der Anmeldung: **23.04.2003**
(21) Anmeldenummer: 01124232.8
(22) Anmeldetag: 15.10.2001
(51) Int. Cl.: H04N 7/24, H04N 7/16, H04N 7/167

(54) **Verfahren und Vorrichtung zum Bereitstellen von Daten**

(71) Anmelder: Beta Research GmbH, 85774 Unterföhring (DE)
(72) Erfinder: Barth, Ingo, Dr., D-85774 Unterföhring (DE)
(74) Vertreter: Heselberger, Johannes

(57) **Zusammenfassung**

Verfahren zum Bereitstellen von Daten eines dezentralen Dienstes an einen Abnehmer, wobei ein dezentraler Datenstrom von einer dezentralen Dienststation an den Abnehmer übertragen wird, wobei der dezentrale Datenstrom mindestens Daten eines dezentralen Dienstes und Zugriffsbedingungen enthält, deren Erfüllung durch den Abnehmer eine Voraussetzung für dessen Zugang zu dem dezentralen Datenstrom darstellt, wobei die Zugriffsbedingungen in den dezentralen Datenstrom durch Übernahme aus einem, von einer zentralen Dienststation zur dezentralen Dienststation übertragenen, zentralen Datenstrom aufgenommen werden, der mindestens die Zugriffsbedingungen enthält.

## Beschreibung

Die Erfindung betrifft ein Verfahren und eine Vorrichtung zum Bereitstellen von Daten eines dezentralen Dienstes an einen Abnehmer.

Ein derartiges Verfahren ist aus dem DVB (Digital Video Broadcasting) Standard für digitales Fernsehen bekannt. Bei dem bekannten Verfahren empfängt eine dezentrale Dienststation einen Datenstrom von einer zentralen Dienststation. Der Datenstrom weist Nutzdaten eines zentralen Dienstes auf, die mittels eines Kontrollworts verschlüsselt sind. Diese Nutzdaten sind dazu bestimmt, von einem Abnehmer unter der Bedingung einer Berechtigung des Abnehmers mittels des Kontrollworts entschlüsselt zu werden.

Nach DVB weist der Datenstrom eine Freigabekontrollmitteilung (Entitlement Control Message - ECM) auf. Ein erstes Datenfeld der Freigabekontrollmitteilung weist Werte von Zugriffsparametern auf. Die Zugriffsparameter definieren Bedingungen, unter denen eine Nutzung der Nutzdaten erlaubt ist. Ein zweites Datenfeld der Freigabekontrollmitteilung weist das Kontrollwort (Control Word) auf. Das Kontrollwort ist mittels eines Produktschlüssels (Service Key) verschlüsselt. Ein drittes Datenfeld der Freigabekontrollmitteilung enthält eine erste Prüfinformation zum Prüfen der Integrität der Freigabekontrollmitteilung.

Der Datenstrom enthält ferner eine Freigabeverwaltungsmitteilung (Entitlement Management Message - EMM), die speziell an den Abnehmer oder an eine Gruppe von Abnehmern gerichtet ist, der der Abnehmer angehört. Ein erstes Datenfeld der Freigabeverwaltungsmitteilung weist eine Adresse des Abnehmers bzw. der Gruppe von Abnehmern auf. Ein zweites Datenfeld enthält eine den Abnehmer betreffende Freigabeinformation. Ein drittes Datenfeld enthält den Produktschlüssel. Der Produktschlüssel ist mittels eines Kartenschlüssel verschlüsselt. Ein viertes Datenfeld der Freigabeverwaltungsmitteilung enthält eine zweite Prüfinformation zum Prüfen der Integrität der Freigabeverwaltungsmitteilung.

Die dezentrale Dienststation sendet den Datenstrom mit der Freigabeverwaltungsmitteilung, der Freigabekontrollmitteilung, einschließlich des verschlüsselten Kontrollworts, und den verschlüsselten Nutzdaten an ein Modul für einen bedingten Zugriff (Conditional Access Module - CAM, nachfolgend Zugriffsmodul genannt) des Abnehmers.

Das Zugriffsmodul des berechtigten Abnehmers weist eine Prozessorkarte mit einer Speichereinheit auf, in der der Kartenschlüssel sowie Abnehmerdaten gespeichert sind. Anhand der Werte der Zugriffsparameter, die in der Freigabekontrollmitteilung enthalten sind, sowie der Abnehmerdaten, die auf der Prozessorkarte gespeichert sind, ermittelt das Zugriffsmodul, ob der Abnehmer die Bedingungen für einen Zugriff auf die Nutzdaten erfüllt. Falls ja, entschlüsselt die Prozessorkarte mittels des Kartenschlüssels die Freigabeverwaltungsmitteilung und erhält so den Produktschlüssel. Die Prozessorkarte liest die Freigabekontrollmitteilung mit dem verschlüsselten Kontrollwort und entschlüsselt mittels des Produktschlüssels das Kontrollwort. Die Prozessorkarte überträgt das Kontrollwort an das Zugriffsmodul. Das Zugriffsmodul entschlüsselt die Nutzdaten mittels des Kontrollworts. Die Nutzdaten werden in bekannter Weise, etwa in einer Demultiplexereinheit und in einer Dekomprimierungseinheit, zum Konsum durch den Abnehmer weiterverarbeitet.

Das beschriebene Verfahren hat den Nachteil, dass jede Quelle eines Datenstroms, etwa eine Dienststation, eine der Quelle zugeordnete abnehmerbezogene Erzeugung und Verwaltung von Schlüsseln erfordert, um die Daten zu verschlüsseln. Somit ist eine Erzeugung und Verwaltung von Schlüsseln so oft erforderlich, wie Nutzdaten von einer Dienststation verarbeitet werden. Insbesondere erfordert eine Bereitstellung mehrerer dezentraler Datenströme, wie etwa im Falle mehrerer regionaler Dienste, eine abnehmerbezogene Erzeugung und Verwaltung einer entsprechenden Zahl zugeordneter Schlüssel bei den einzelnen dezentralen Dienststationen. Das System enthält eine Speichereinheit, in der die Abnehmerdaten jedes Abnehmers gespeichert sind. Jede dezentrale Dienststation muss somit denselben hohen Anforderungen, insbesondere hinsichtlich einer Abnehmerdatensicherheit, genügen wie die zentrale Dienststation.

Bei einem anderen bekannten Verfahren kommt das Zwischenzugriffsmodul ohne eine Speichereinheit mit den Abnehmerdaten aus, weil die zentrale Dienststation dem Zwischenzugriffsmodul die Abnehmerdaten auf Abruf zusendet. Das Verfahren ist jedoch nachteilig, weil für den Abruf und das Senden der Abnehmerdaten eine zusätzliche Datenleitung zwischen der dezentralen Dienststation und der zentralen Dienststation benötigt wird. Bei einer Unterbrechung der Datenleitung ist die dezentrale Dienststation dann nicht mehr zu einer Verschlüsselung der Nutzdaten mittels aktuellen Schlüssels in der Lage. Dies ist von großer praktischer Bedeutung, denn ein häufiger Wechsel des Kontrollworts ist erforderlich, um die Gefahr zu minimieren, dass ein unberechtigter Abnehmer die verschlüsselten Daten unbefugterweise entschlüsselt. Um den Folgen einer Unterbrechung der Datenleitung entgegenzuwirken, ist ein größerer technischer Aufwand, etwa eine redundante Übertragung der Abnehmerdaten durch mehrere Datenleitungen, erforderlich. Außerdem stellt die Übertragung der Abnehmerdaten ein Sicherheitsrisiko dar.

Der Erfindung liegt die Aufgabe zugrunde, ein Verfahren zum Bereitstellen von Daten eines dezentralen Dienstes an einen Abnehmer anzugeben, bei dem der technische Aufwand für eine Aufrechterhaltung einer großen Sicherheit und Zuverlässigkeit besonders gering ist. Eine zweite Aufgabe der Erfindung besteht darin, eine Vorrichtung anzugeben, mittels derer auf einfache Weise sicher und zuverlässig Daten des dezentralen Dienstes bereitgestellt werden können.

Die Erfindung löst die erste Aufgabe mit einem Verfahren zum Bereitstellen von Daten eines dezentralen Dienstes an einen Abnehmer, wobei
a) ein dezentraler Datenstrom von einer dezentralen Dienststation an den Abnehmer übertragen wird, wobei der dezentrale Datenstrom mindestens Daten eines dezentralen Dienstes und Zugriffsbedingungen enthält, deren Erfüllung durch den Abnehmer eine Voraussetzung für dessen Zugang zu dem dezentralen Datenstrom darstellt, wobei
b) die Zugriffsbedingungen in den dezentralen Datenstrom durch Übernahme aus einem, von einer zentralen Dienststation zur dezentralen Dienststation übertragenen, zentralen Datenstrom aufgenommen werden, der mindestens die Zugriffsbedingungen enthält.

Im Rahmen der vorliegenden Anmeldung umfasst "Dienst" jede Art von Information, wie beispielsweise audiovisuelle Information, die mittels Daten ausdrückbar ist.

"Dezentral" bedeutet im Unterschied zu "zentral", dass die dezentrale Dienststation hinsichtlich der Übertragung der Daten in der Übertragungskette dichter - nicht notwendigerweise im räumlichen Sinne - am Abnehmer angeordnet ist als die zentrale Dienststation: Der Abnehmer empfängt Daten der zentralen Dienststation, die durch die dezentrale Dienststation an den Abnehmer geleitet werden. Daten der dezentralen Dienststation werden zum Empfang durch den Abnehmer dagegen nicht durch die zentrale Dienststation geleitet. Insbesondere weist die zentrale Dienststation möglichst weitgehende Sicherheitseinrichtungen auf, so dass abnehmerbezogene und andere besonders wichtige Daten bevorzugt bei der zentralen Dienststation gespeichert sind.

Unter "Zugriffsbedingungen" kann auch nur eine einzige Zugriffsbedingung zu verstehen sein. Eine Zugriffsbedingung kann etwa eine räumliche Zuordnung des Abnehmers sein, oder eine Bezahlungsbedingung.

Bei dem Verfahren ist der technische Aufwand an der dezentralen Dienststation für eine Aufrechterhaltung einer großen Sicherheit und Zuverlässigkeit besonders gering, da die dezentrale Dienststation erfindungsgemäß die Zugriffsbedingungen ohne Berücksichtigung abnehmerbezogener Daten in den dezentralen Datenstrom einfach übernimmt. Die dezentrale Dienststation ist dabei von der zentralen Dienststation ermächtigt, den dezentralen Dienst an den Abnehmer unter den Zugriffsbedingungen der zentralen Dienststation bereitzustellen.

Die Daten des dezentralen Dienstes werden in dem dezentralen Datenstrom vorzugsweise mit Hilfe eines ersten Schlüssels verschlüsselt. Die Verschlüsselung erschwert einen Zugriff auf die Daten, insbesondere für den Fall, dass der Abnehmer den Zugriffsbedingungen nicht genügt. Der erste Schlüssel ist in schneller Folge immer neu erzeugbar, um eine besonders hohe Sicherheit zu gewährleisten. Weiter vorzugsweise enthält der dezentrale Datenstrom den ersten Schlüssel. Somit erhält der Abnehmer den aktuell verwendeten ersten Schlüssel, so dass der ersten Schlüssel bei dem Abnehmer zur Verfügung steht, wenn er zum Entschlüsseln der Daten des dezentralen Dienstes erforderlich ist. Dabei ist ein Aufwand zum Bereithalten des aktuell verwendeten ersten Schlüssels bei dem Abnehmer minimiert. Der Abnehmer kann aber auch - bei einem permanent verwendeten ersten Schlüssel - über den ersten Schlüssel verfügen, der ihm etwa bei seiner Anmeldung zu dem dezentralen Dienst übergeben wird.

Bei einer Ausführungsform der Erfindung sind die Zugriffsbedingungen und der erste Schlüssel Bestandteil einer Freigabekontrollmitteilung, die von der zentralen Dienststation an die dezentrale Dienststation übertragen wird. Die Freigabekontrollmitteilung enthält ferner beispielsweise noch eine Prüfzahl, anhand derer die Integrität der übertragenen Freigabekontrollmitteilung überprüfbar ist. Die verschlüsselten Daten des dezentralen Dienstes werden mit der Freigabekontrollmitteilung versehen, bevor sie an den Abnehmer gesendet werden. Damit ist der technische Aufwand für eine Freigabekontrolle bezüglich des dezentralen Dienstes minimiert, weil eine dezentrale Erstellung der Freigabekontrollmitteilung nicht erforderlich ist. Anhand der Freigabekontrollmitteilung kann ein Empfangsgerät des Abnehmers ermitteln, ob dem Abnehmer ein Zugriff auf den empfangenen dezentralen Dienst zu gewähren ist. Die zentrale Dienststation kann bei der Vorgabe der Zugriffsbedingungen technische, gesellschaftliche und/oder wirtschaftliche Gesichtspunkte berücksichtigen.

Bei einer Ausführungsform enthält der dezentrale Datenstrom Daten eines zentralen Dienstes, die mit dem zentralen Datenstrom von der zentralen Dienststation zur dezentralen Dienststation übertragen wurden. Insbesondere handelt es sich bei diesen Daten um Nutzdaten, d. h. Daten, die den Inhalt des Dienstes wie beispielsweise eines Fernsehfilms erfassen. Gegebenenfalls werden die Nutzdaten bei der dezentralen Dienststation entschlüsselt und derart verarbeitet, dass die verarbeiteten Nutzdaten des zentralen Dienstes Nutzdaten des dezentralen Dienstes bilden. "Verarbeiten der Nutzdaten" erfasst ein Ändern hinsichtlich des Inhalts der Nutzdaten wie etwa ein Ersetzen der Nutzdaten oder eines Nutzdatenabschnitts durch Nutzdaten eines zweiten Inhalts, ein Hinzufügen von Nutzdaten eines dritten Inhalts, ein Vermindern der Nutzdaten um einen Nutzdatenabschnitt eines vierten Inhalts. "Verarbeiten der Nutzdaten" erfasst ferner ein Ändern hinsichtlich der Darstellung des Inhalts der Nutzdaten wie etwa eine Datenauflösung und/oder ein Ändern hinsichtlich der Übertragung der Nutzdaten wie etwa eine Datenübertragungsrate oder eine Übertragungsbandbreite, beispielsweise unter Verwendung eines sogenannten Transraters. Bei dieser Ausführungsform des Verfahrens ist eine teilweise oder vollständige Übernahme eines zentralen Dienstes in den dezentralen Dienst möglich. Der dezentrale Dienst kann somit auf dem zentralen Dienst aufgebaut sein. Bei einer Ausführungsform baut der dezentrale Dienst auf mehreren zentralen Diensten auf. Die zentralen Dienste werden bei einer Ausführungsform von verschiedenen zentralen Dienststationen empfangen. Die zentralen Dienste werden simultan zusammengeführt oder nacheinander eingespielt. Bei diesen Ausführungsformen ist eine besondere Vielseitigkeit des bereitgestellten dezentralen Dienstes erreichbar.

Die Daten des zentralen Dienstes können mit Hilfe des ersten Schlüssels verschlüsselt sein. Da der erste Schlüssel zum Verschlüsseln der Daten des zentralen Dienstes erzeugt wird, ist ein zusätzlicher Aufwand zum Verschlüsseln der Daten des dezentralen Dienstes minimiert.

Bei einer bevorzugten Ausführungsform ist der erste Schlüssel mit Hilfe eines zweiten Schlüssels verschlüsselt. Der zweite Schlüssel ist anhand von Daten ermittelbar, beispielsweise entschlüsselbar, die auf die dezentrale Dienststation bezogen sind. Beispielsweise enthalten die Daten eine Information über eine Zugriffsberechtigung der Dienststation auf den zentralen Dienst, ähnlich wie Abnehmerdaten eine Information über eine Zugriffsberechtigung des Abnehmers auf den zentralen Dienst enthalten. Die dezentrale Dienststation bildet bei dieser Ausführungsform des Verfahrens gewissermaßen einen Abnehmer des zentralen Dienstes der zentralen Dienststation. Der zweite Schlüssel ist gegebenenfalls zusammen mit weiteren zweiten Schlüsseln, die weiteren Abnehmern zugeordnet sind, bei der zentralen Dienststation etwa in einem mit der zentralen Dienststation verbundenen Speichermittel zentral lagerbar. Dies hat den Vorteil, dass ein technischer Aufwand für Sicherheitsvorkehrungen an der dezentralen Dienststation gering ist. Im Unterschied zu den im Stand der Technik bekannten Verfahren kommt die dezentrale Dienststation bei der Ermittlung des zweiten Schlüssels ohne eine Bezugnahme auf eine Zugriffsberechtigung des Abnehmers aus, und gegenüber den im Stand der Technik bekannten Verfahren entfällt ein Erfordernis, die Abnehmerdaten an der dezentralen Dienststation zu speichern. Somit ist bei der dezentralen Dienststation ein Sicherheitsaufwand zum Schutz der Daten minimiert. Auch ein Abfragen der Abnehmerdaten bei der zentralen Dienststation ist nicht erforderlich, so dass die Folgen eines Abhörens der Datenleitung zwischen der zentralen und der dezentralen Dienststation verringert sind. Die dezentrale Dienststation eignet sich beispielsweise besonders, um als regionale Programmstation ein Regionalprogramm an den Abnehmer bereitzustellen.

Bevorzugt ist der zweite Schlüssel Bestandteil einer Freigabeverwaltungsmitteilung, die von der zentralen Dienststation an die dezentrale Dienststation übertragen wird. Die Freigabeverwaltungsmitteilung enthält weitere Daten wie beispielsweise eine Freigabeinformation. Die Freigabeverwaltungsmitteilung ist auf den Anwender des erfindungsgemäßen Verfahrens, d. h. der dezentralen Dienststation bezogen. Beispielsweise enthält die Freigabeverwaltungsmitteilung eine Adresse der dezentralen Dienststation. Bei einer Ausführungsform ermöglicht die Adressierung eine Übertragung der Freigabeverwaltungsmitteilung ausschließlich an die dezentrale Dienststation.

Die dezentrale Dienststation verschlüsselt in dieser Ausrührungsform etwa den ersten Schlüssel mit Hilfe des zweiten Schlüssels. Einerseits erhält der Abnehmer die verschlüsselten Daten des dezentralen Dienstes gleich mit dem passenden ersten Schlüssel. Andererseits kann er den ersten Schlüssel nur entschlüsseln, wenn er die Voraussetzungen der zentralen Dienststation zur Freigabe des zweiten Schlüssels erfüllt. Somit unterliegt der Abnehmer bezüglich des dezentralen Dienstes den selben Bedingungen wie bezüglich des zentralen Dienstes, ohne dass an der dezentralen Dienststation abnehmerbezogene Vorkehrungen getroffen sind. Weil eine dezentrale Verwaltung von Abnehmerdaten nicht vorgesehen ist, bedarf es keiner besonderen Sicherheitsvorkehrungen am Ort der Anwendung des erfindungsgemäßen Verfahrens, d. h. insbesondere bei der dezentralen Dienststation.

Bei einer bevorzugten Ausführungsform ist der zweite Schlüssel mit Hilfe eines dritten Schlüssels verschlüsselt. Der dritte Schlüssel ist individuell für die dezentrale Dienststation erstellt. Der zweite Schlüssel lässt sich durch Entschlüsselung mit Hilfe des dritten Schlüssels ermitteln. Erforderlichenfalls lässt sich der dritte Schlüssel einfach ändern, so dass eine besonders hohe Sicherheit gewährleistet ist. Besonders bevorzugt wird der dritte Schlüssel in einem Speichermittel gespeichert. Die dezentrale Dienststation weist ein Speichermittel auf, das den dritten Schlüssel beinhaltet. Das Speichermittel der dezentralen Dienststation ist dabei bevorzugt in einer Prozessorkarte (Chipkarte) angeordnet. Die Prozessorkarte entspricht einer Prozessorkarte, wie sie etwa das Zugriffsmodul des Abnehmers aufweist. Somit ist ein technischer Aufwand zur Ermittlung des Kontrollwortes an der dezentralen Dienststation auf den Aufwand eines Abnehmers minimiert.

Bei einer ganz besonders bevorzugten Ausführungsform des erfindungsgemäßen Verfahrens ist der Dienst der dezentralen Dienststation in einem MPEG (Moving Picture Expert Group) Format, insbesondere einem MPEG-2 Format, formatiert. Dieses Format ermöglicht eine Entschlüsselung bei dem Abnehmer mittels eines üblichen Decoder-Gerätes.

Die Erfindung löst die zweite Aufgabe mit einer Vorrichtung einer dezentralen Dienststation mit einer Erkennungseinheit zum Erkennen eines aktuellen, mit Hilfe eines zweiten Schlüssels verschlüsselten ersten Schlüssels anhand eines Erkennungssignals in einem empfangenen zentralen Datenstrom, etwa einer Indexreferenz, und einer Zugriffseinheit, die mit der Erkennungseinheit verbunden ist, zum Entschlüsseln des aktuellen ersten Schlüssels mit Hilfe des zweiten Schlüssels. Die Zugriffseinheit verfügt über den zweiten Schlüssel, der dort etwa permanent gespeichert ist, oder, vorzugsweise, von der zentralen Dienststation abgefragt wird. Weiter weist die dezentrale Dienststation eine Trennungseinheit zum Übernehmen des verschlüsselten ersten Schlüssels und zum Übernehmen von Zugriffsbedingungen aus dem zentralen Datenstrom auf. Die Trennungseinheit kann auch weitere Elemente des zentralen Datenstroms übernehmen, wenn dies gewünscht und vereinbart ist. Zur Identifizierung der zu übernehmenden Elemente aus dem zentralen Datenstrom kann die Trennungseinheit mit einer geeigneten Identifizierungseinheit verbunden oder versehen sein, für die Übernahme des ersten Schlüssels etwa mit der beschriebenen Erkennungseinheit.

Die dezentrale Dienststation verfügt weiterhin über eine Verschlüsselungseinheit. Die Verschlüsselungseinheit ist mit der Erkennungseinheit verbunden, um das Erkennungssignal, etwa die Indexreferenz, von der Erkennungseinheit aufzunehmen. Ferner ist die Verschlüsselungseinheit mit der Zugriffseinheit zum Zweck der Aufnahme des ersten Schlüssels verbunden, zum Verschlüsseln von Daten eines dezentralen Dienstes mit Hilfe des ersten Schlüssels. Die dezentrale Dienststation weist einen Multiplexer auf, der mit der Verschlüsselungseinheit zur Aufnahme der mit Hilfe des ersten Schlüssels verschlüsselten Daten des dezentralen Dienstes verbunden ist, und der weiterhin mit der Trennungseinheit zur Aufnahme des ersten Schlüssels und der Zugriffsbedingungen verbunden ist.

Von der dezentralen Dienststation ist dementsprechend ein Datenstrom an den Abnehmer bereitstellbar, der die Daten des dezentralen Dienstes, den ersten Schlüssel und die Zugriffsbedingungen aufweist.

Bevorzugt weist die Vorrichtung eine Speichereinheit zum Speichern des zweiten Schlüssels auf. Bei dieser Ausführungsform kann der erste Schlüssel mit Hilfe des zweiten Schlüssels entschlüsselt werden, wenn der zweite Schlüssel gespeichert ist.

Bei einer Ausführungsform weist die Zugriffseinheit eine Entschlüsselungseinrichtung auf, die zum Entschlüsseln der Daten des zentralen Dienstes mit Hilfe des ersten Schlüssels vorgesehen ist. Die Daten des entschlüsselten zentralen Dienstes sind für eine weitere Verarbeitung zu Daten des dezentralen Dienstes verfügbar.

Nachfolgend wird ein Ausführungsbeispiel der Erfindung anhand der Figuren näher erläutert. Es zeigen:
- Fig. 1: eine schematische Darstellung einer Anordnung von Dienststationen und Abnehmern; und
- Fig. 2: eine schematische Darstellung eines Einspielsystems zur Durchführung des erfindungsgemäßen Verfahrens.

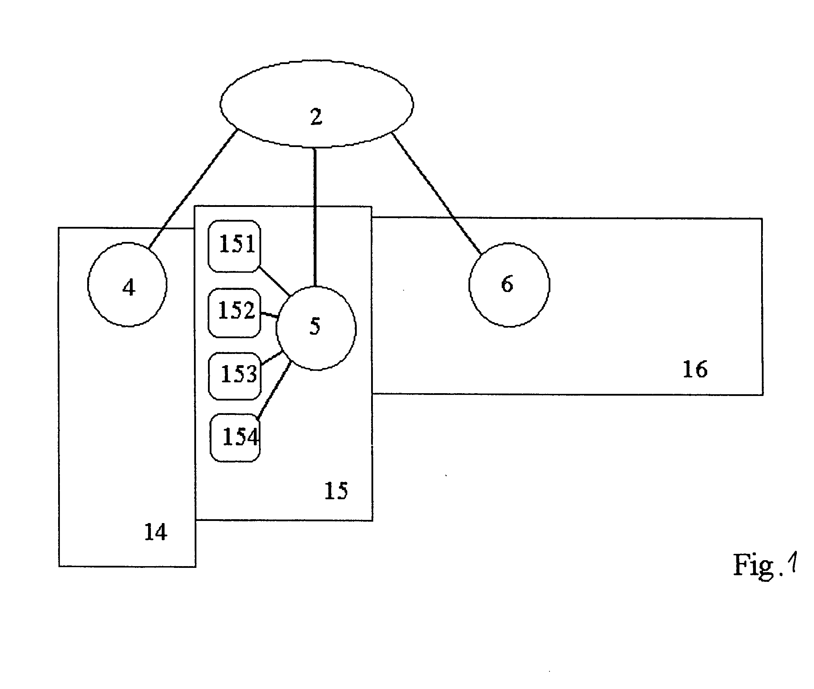

Die in Fig. 1 dargestellte Anordnung weist eine zentrale Dienststation 2 sowie mehrere dezentrale Dienststationen 4, 5, 6 auf, die jeweils mit der zentralen Dienststation 2 durch eine Datenübertragungsleitung verbunden sind. Jede dezentrale Dienststation 4, 5, 6 ist einer Region 14, 15, 16 zugeordnet. Jede Region weist mehrere Abnehmer auf, die in Fig. 1 nicht dargestellt sind.

Jedem Abnehmer ist ein Zugriffsmodul zugeordnet. Dies ist beispielsweise in der Region 15 dargestellt, die vorliegend die Zugriffsmodule 151, 152, 153, 154 aufweist. Jedes Zugriffsmodul 151, 152, 153, 154 ist mit der zugeordneten dezentralen Dienststation 5 durch eine Datenübertragungsleitung verbunden und zum Empfangen, Entschlüsseln und Verarbeiten von Daten im Datenstrom eines Dienstes von der zugeordneten dezentralen Dienststation 5 vorgesehen, so dass der Dienst konsumierbar ist. Die Übertragungsleitungen bilden gemeinsam ein Übermittlungsnetz für den Dienst.

Der Datenstrom des Dienstes ist entsprechend dem Digital Video Broadcasting (DVB) Standard in einem MPEG-2 Format formatiert. Der Datenstrom weist Nutzdaten, etwa die Daten eines Fernsehfilmes, Freigabekontrollmitteilungen (Entitlement Control Message - ECM) sowie Freigabeverwaltungsmitteilungen (Entitlement Management Message - EMM) auf; beispielsweise ist für jeden Abnehmer eine eigene Freigabeverwaltungsmitteilung vorgesehen.

Die zentrale Dienststation 2 dient einer globalen Versorgung der Abnehmer der Regionen 14, 15, 16, beispielsweise der den Zugriffsmodulen 151, 152, 153, 154 zugeordneten Abnehmer der Region 15, mit einem zentralen Dienst. Die dezentralen Dienststationen 4, 5, 6 dienen einer lokalen Versorgung der Abnehmer der jeweils zugeordneten Region 14, 15 bzw. 16 mit dem zentralen oder einem dezentralen Dienst. Zur Erfüllung dieser Funktion weisen die dezentralen Dienststationen 4, 5, 6 jeweils ein Einspielsystem 25 auf.

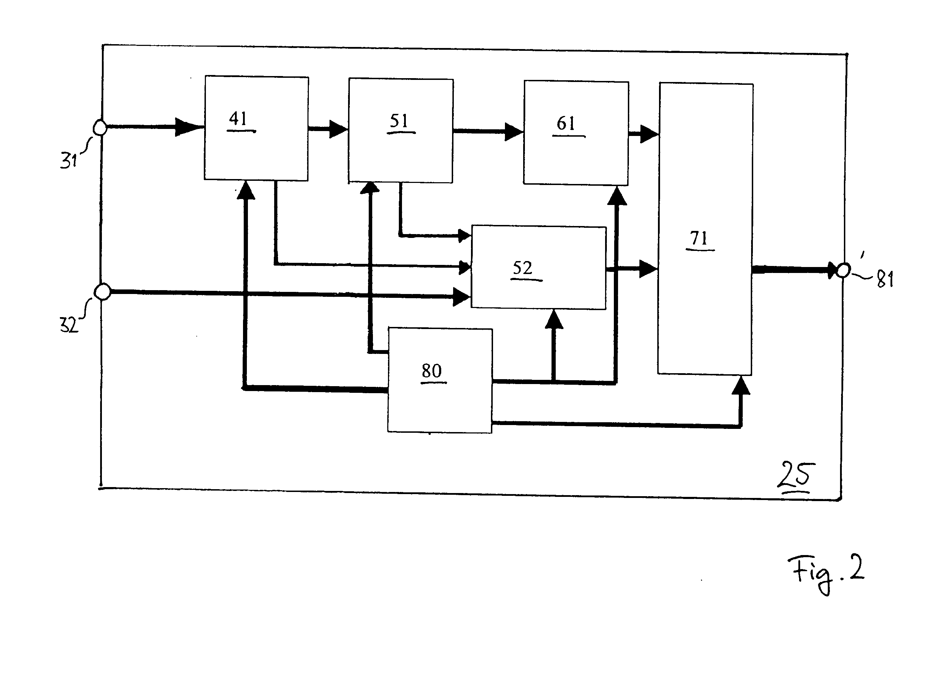

Fig. 2 zeigt das Einspielsystem 25, das bei jeder dezentralen Dienststation 4, 5, 6 angeordnet ist. Das Einspielsystem 25 dient insbesondere einem Bereitstellen des zentralen und/oder des dezentralen Dienstes bei den Abnehmern derjenigen Region, der die dezentrale Dienststation 4, 5 bzw. 6 zugeordnet ist. Das beispielsweise bei der dezentralen Dienststation 5 angeordnete Einspielsystem 25 wird nachfolgend näher erläutert.

Das Einspielsystem 25 weist einen ersten Diensteingang 31 zur Aufnahme eines Datenstromes des zentralen Dienstes von der zentralen Dienststation 2 auf. Ferner weist das Einspielsystem 25 einen zweiten Diensteingang 32 zur Aufnahme eines Datenstromes des dezentralen Dienstes auf, der etwa bei der dezentralen Dienststation 5 erzeugt ist.

Das Einspielsystem 25 weist eine Erkennungseinheit 41 zum Erkennen eines Kontrollworts in einer Freigabekontrollmitteilung auf, mittels dessen die Daten des zentralen Dienstes aktuell verschlüsselt sind. Die Erkennungseinheit 41 ist mit dem ersten Diensteingang 31 derart verbunden, dass die Erkennungseinheit 41 den Datenstrom des zentralen Dienstes von dem ersten Diensteingang 31 aufnimmt.

Ferner weist das Einspielsystem 25 ein Stationszugriffsmodul 51 zum Auslesen und Analysieren der Freigabekontrollmitteilung (ECM) in dem Datenstrom auf. Das Stationszugriffsmodul 51 weist eine Speichereinheit auf, in der ein verschlüsselter Produktschlüssel zum Entschlüsseln des Kontrollworts gespeichert ist. Der Produktschlüssel ist im Rahmen der Freigabeverwaltungsmitteilung (EMM) von der zentralen Dienststation auf Abfrage an die dezentrale Dienststation 5 übermittelt. Das Stationszugriffsmodul 51 weist eine Prozessorkarte auf. Die Prozessorkarte beinhaltet eine Verarbeitungseinheit und einen mit der Verarbeitungseinheit verbundenen Speicher. In dem Speicher ist ein Kartenschlüssel zum Entschlüsseln von Produktschlüsseln gespeichert. Der Kartenschlüssel ist speziell zur Verwendung bei der dezentralen Dienststation 5 vorgesehen. Ferner weist der Speicher ein Datenverarbeitungsprogramm zum Entschlüsseln des Produktschlüssels mittels des Kartenschlüssels auf. Das Stationszugriffsmodul 51 ist mit der Erkennungseinheit 41 derart verbunden, dass es den Datenstrom des zentralen Dienstes aufnimmt.

Das Einspielsystem 25 weist eine Trennungseinheit 61 zum Erkennen und Ausgeben der Freigabekontrollmitteilung auf. Die Trennungseinheit 61 ist mit dem Stationszugriffsmodul 51 derart verbunden, dass sie den Datenstrom mit der Freigabekontrollmitteilung von dem Stationszugriffsmodul 51 empfängt.

Das Einspielsystem 25 weist einen Multiplexer 71 zum Verbinden und/oder Überlagern mehrerer Datenströme auf. Ein erster Dateneingang des Multiplexers 71 ist mit der Trennungseinheit 61 derart verbunden, dass der Multiplexer 71 von der Trennungseinheit 61 die Freigabekontrollmitteilung erhält. Das Einspielsystem 25 weist einen Dienstausgang 81 auf, der mit dem Multiplexer 71 verbunden ist und von dem aus ein Datenstrom in das Übermittlungsnetz eingespielt und insbesondere an die Zugriffsmodule 151, 152, 153, 154 der Abnehmer gesendet werden kann.

Das Einspielsystem 25 weist ferner eine Verschlüsselungseinheit 52 zum Verschlüsseln von Daten eines Dienstes auf. Die Verschlüsselungseinheit 52 ist mit dem zweiten Eingang 32 derart verbunden, dass sie den Datenstrom des dezentralen Dienstes, beispielsweise Nutzdaten, aufnimmt. Die Verschlüsselungseinheit 52 ist ferner mit der Erkennungseinheit 41 derart verbunden, dass die Verschlüsselungseinheit 52 von der Erkennungseinheit 41 eine Indexreferenz des aktuellen Kontrollwortes erfährt, die signalisiert, welches das gegenwärtig von der zentralen Dienststation verwendete Kontrollwort ist. Die Verschlüsselungseinheit 52 ist überdies mit dem Stationszugriffsmodul 51 derart verbunden, dass sie von dem Stationszugriffsmodul 51 Kontrollworte empfangen kann. Ferner ist die Verschlüsselungseinheit 52 mit einem zweiten Dateneingang des Multiplexers 71 verbunden, um den verschlüsselten Datenstrom des dezentralen Dienstes an den Multiplexer 71 weiter zu leiten.

Das Einspielsystem 25 weist schließlich eine Steuereinheit 80 zum Steuern des Einspielsystems 25, insbesondere zum Ansteuern der oben beschriebenen Komponenten 41, 51, 52, 61, 71 des Einspielsystems 25 auf. Die Steuereinheit 80 ist mit den Komponenten durch Steuerleitungen verbunden.

Nachfolgend wird die Funktionsweise des Einspielsystems 25 beschrieben. Der erste Eingang 31 empfängt von der zentralen Dienststation 2 einen Datenstrom eines zentralen Dienstes, der im "Moving Picture Expert Group 2" (MPEG-2) Format formatiert ist, und leitet den Datenstrom an die Erkennungseinheit 41 weiter. Insbesondere weist der Datenstrom eine Freigabekontrollmitteilung mit wenigstens einem verschlüsselten Kontrollwort auf.

Die Erkennungseinheit 41 erkennt ein aktuelles Kontrollwort, indem sie in einem Kopfabschnitt der Freigabekontrollmitteilung des Datenstroms im MPEG-2 Format eine Indexreferenz des aktuellen, verschlüsselten Kontrollwortes liest. Die Erkennungseinheit 41 leitet die Indexreferenz zur weiteren Verwendung an die Verschlüsselungseinheit 52. Die Erkennungseinheit 41 leitet den Datenstrom weiter an das Stationszugriffsmodul 51.

Das Stationszugriffsmodul 51 liest die Freigabekontrollmitteilung in dem Datenstrom. Das Stationszugriffsmodul 51 analysiert die Freigabekontrollmitteilung hinsichtlich des zentralen Dienstes und ruft den Produktschlüssel, der dem zentralen Dienst zugeordnet ist, aus der Speichereinheit ab. Der Produktschlüssel wird mittels des Kartenschlüssels der dezentralen Dienststation 5 entschlüsselt. Mittels des entschlüsselten Produktschlüssels werden das aktuelle Kontrollwort sowie gegebenenfalls künftige Kontrollwörter entschlüsselt und zur Verwendung an die Verschlüsselungseinheit 52 weitergeleitet. Den Datenstrom leitet das Stationszugriffsmodul 51 an die Trennungseinheit 61 weiter.

Die Trennungseinheit 61 übernimmt die Freigabekontrollmitteilung aus dem Datenstrom, indem sie die Freigabekontrollmitteilung aus dem Datenstrom heraustrennt oder herauskopiert, und übergibt die Freigabekontrollmitteilung an den Multiplexer 71.

Die Verschlüsselungseinheit 52 empfängt die Indexreferenz des aktuellen Kontrollworts von der Erkennungseinheit 41. Ferner empfängt die Verschlüsselungseinheit 52 die entschlüsselten Kontrollwörter von dem Stationszugriffsmodul 51. Außerdem empfängt die Verschlüsselungseinheit 52 einen Datenstrom eines dezentralen Dienstes von dem zweiten Diensteingang 32. Die Verschlüsselungseinheit 52 verschlüsselt den Datenstrom des dezentralen Dienstes mittels des indexreferenzierten aktuellen Kontrollworts, d. h. die Verschlüsselungseinheit 52 verwendet zur Verschlüsselung das selbe Kontrollwort wie die zentrale Dienststation. Die Verschlüsselungseinheit 52 leitet den Datenstrom von dem verschlüsselten Dienst weiter an den Multiplexer 71.

Der Multiplexer 71 fügt die Freigabekontrollmitteilung aus dem Datenstrom des zentralen Dienstes in den Datenstrom des dezentralen Dienstes ein. Den Datenstrom mit der Freigabekontrollmitteilung und dem dezentralen Dienst spielt der Multiplexer zum Dienstausgang 81 und in das Übermittlungsnetz ein. Somit ist der dezentrale Dienst mit der Freigabekontrollmitteilung des zentralen Dienstes bei den Zugriffsmodulen 151, 152, 153, 154 der regionalen Abnehmer bereitgestellt. Insbesondere weist der Datenstrom bei dem Abnehmer das aktuelle Kennwort zur Verwendung durch das Zugriffsmodul des Abnehmers auf. Wenn eine Übertragung des dezentralen Dienstes beendet ist, steuert die Steuereinheit 80 den Multiplexer 71 derart an, dass der Multiplexer den zentralen Datenstrom vollständig, d. h. einschließlich der ungeänderten Daten des zentralen Dienstes an den Zugriffsmodule 151, 152, 153, 154 der Abnehmer überträgt, so dass wieder der zentrale Dienst an die Abnehmer bereitgestellt wird.

## Patentansprüche

1. Verfahren zum Bereitstellen von Daten eines dezentralen Dienstes an einen Abnehmer, wobei
a) ein dezentraler Datenstrom von einer dezentralen Dienststation (4, 5, 6) an den Abnehmer übertragen wird, wobei der dezentrale Datenstrom mindestens Daten eines dezentralen Dienstes und Zugriffsbedingungen enthält, deren Erfüllung durch den Abnehmer eine Voraussetzung für dessen Zugang zu dem dezentralen Datenstrom darstellt, wobei
b) die Zugriffsbedingungen in den dezentralen Datenstrom durch Übernahme aus einem, von einer zentralen Dienststation (2) zur dezentralen Dienststation (4, 5, 6) übertragenen, zentralen Datenstrom aufgenommen werden, der mindestens die Zugriffsbedingungen enthält.

2. Verfahren nach Anspruch 1, **dadurch gekennzeichnet, dass** mindestens die Daten des dezentralen Dienstes in dem dezentralen Datenstrom mit Hilfe eines ersten Schlüssels verschlüsselt werden.

3. Verfahren nach Anspruch 2, **dadurch gekennzeichnet, dass** der dezentrale Datenstrom den ersten Schlüssel enthält.

4. Verfahren nach einem der Ansprüche 2 oder 3, **dadurch gekennzeichnet, dass** die Zugriffsbedingungen und der erste Schlüssel Bestandteil einer Freigabekontrollmitteilung sind, die von der zentralen Dienststation im zentralen Datenstrom zur dezentralen Dienststation übertragen und von der dezentralen Dienststation in den dezentralen Datenstrom übernommen wird.

5. Verfahren nach einem der vorhergehenden Ansprüche, **dadurch gekennzeichnet, dass** der dezentrale Datenstrom Daten eines zentralen Dienstes enthält, die mit dem zentralen Datenstrom von der zentralen Dienststation (2) zur dezentralen Dienststation (4, 5, 6) übertragen wurden.

6. Verfahren nach Anspruch 5, **dadurch gekennzeichnet, dass** die Daten des zentralen Dienstes mit Hilfe des ersten Schlüssels verschlüsselt sind.

7. Verfahren nach einem der Ansprüche 2 bis 6, **dadurch gekennzeichnet, dass** der erste Schlüssel mit Hilfe eines zweiten Schlüssels verschlüsselt wird.

8. Verfahren nach Anspruch 7, **dadurch gekennzeichnet, dass** der zweite Schlüssel Bestandteil einer Freigabeverwaltungsmitteilung ist, die von der zentralen Dienststation (2) an die dezentrale Dienststation (4, 5, 6) übertragen wird.

9. Verfahren nach einem der Ansprüche 7 oder 8, **dadurch gekennzeichnet, dass** der zweite Schlüssel mit Hilfe eines dritten Schlüssels verschlüsselt wird.

10. Dezentrale Dienststation (4, 5, 6) mit
- einer Erkennungseinheit (41) zum Erkennen eines mit Hilfe eines zweiten Schlüssels verschlüsselten ersten Schlüssels anhand eines Erkennungssignals in einem empfangenen zentralen Datenstrom;
- einer Zugriffseinheit (51), die mit der Erkennungseinheit (41) verbunden ist, zum Entschlüsseln des verschlüsselten ersten Schlüssels mit Hilfe des zweiten Schlüssels;
- einer Trennungseinheit (61) zum Übernehmen des verschlüsselten ersten Schlüssels und zum Übernehmen von Zugriffsbedingungen aus dem zentralen Datenstrom;
- einer Verschlüsselungseinheit (52), die mit der Erkennungseinheit (41) zur Aufnahme des Erkennungssignals verbunden ist und die mit der Zugriffseinheit (51) zur Aufnahme des entschlüsselten ersten Schlüssels verbunden ist, zum Verschlüsseln von Daten eines dezentralen Dienstes mit Hilfe des erkannten ersten Schlüssels; und
einem Multiplexer (71), der mit der Verschlüsselungseinheit (52) zur Aufnahme der mit Hilfe des ersten Schlüssels verschlüsselten Daten des dezentralen Dienstes verbunden ist, und der weiterhin mit der Trennungseinheit (61) zur Aufnahme des verschlüsselten ersten Schlüssels und der Zugriffsbedingungen verbunden ist.
